# EUROPÄISCHE PATENTSCHRIFT

(11) **EP 1 732 283 B1**
(45) Veröffentlichungstag und Bekanntmachung des Hinweises auf die Patenterteilung: **06.07.2016**
(21) Anmeldenummer: 05253601.8
(22) Anmeldetag: 10.06.2005
(51) Int. Cl.: H04L 29/06, H04L 12/18

(54) **Verfahren zur Übertragung von Multimediadaten**
Method of transmission of multimedia data
Méthode de transmission de données multimedia

(43) Veröffentlichungstag der Anmeldung: 13.12.2006
(73) Patentinhaber: QUALCOMM Incorporated, San Diego, CA 92121-1714 (US)
(72) Erfinder: Diana, Clare Edwin, Southampton SO15 4HU (GB); Mitjana, Enric, 1170 Brüssel (BE)
(74) Vertreter: Samson & Partner Patentanwälte mbB

(56) Entgegenhaltungen:
- EP-A- 1 377 099
- EP-A- 1 418 686
- GB-A- 2 406 997
- US-A1- 2004 152 476

## Beschreibung

Die vorliegende Erfindung betrifft ein Verfahren zur Übertragung von Multimediadaten, wobei erste und zweite Multimediadaten von einem Sender an einen Empfänger gesendet werden und die ersten und zweiten Multimediadaten einer Gruppe von Multimediadaten zugeordnet sind.

Derartige Verfahren sind aus dem Stand der Technik bekannt. So ist beispielsweise für die dritte Mobilfunkgeneration ein "Multimedia Broadcast/Multicast Service" (MBMS) vorgesehen, welcher in den von der GPP herausgegebenen Standard TS 23.246 V6.6.0 und den darin zitierten Dokumenten definiert ist. Dieser MBMS gestattet eine effiziente Übertragung von Multimediadaten an mehrere Empfänger. Beim bislang definierten MBMS-Dienst kann es häufig vorkommen, dass verschiedene Multimediadaten zu einer Gruppe von Multimediadaten, einem so genannten "MBMS User Service" zusammengefasst sind. Dabei können die einzelnen Multimediadaten z. B. auch gleichzeitig mehreren verschiedenen Gruppen von Multimediadaten angehören. Weiterhin können Empfangsgeräte unterschiedliche technische Eigenschaften aufweisen und bei aus mehreren Multimediadaten zusammengesetzten "User Services" diese beispielsweise nicht parallel empfangen. Es ist ein Nachteil des Standes der Technik, dass bei der Übertragung von Multimediadaten, die zu einer oder mehrerer Gruppen von Multimediadaten gehören diese unter Umständen zeitlich so ungeschickt gesendet werden, dass einzelne oder mehrere der zum Empfang vorgesehenen Endgeräte nicht alle zu einer Gruppe von Multimediadaten zugehörigen Multimediadaten empfangen können.

EP 1 418 686 A2 betrifft das sogenannte "Paging" mobiler Kommunikationsvorrichtungen und insbesondere, um mobile Kommunikationsvorrichtungen über die Einleitung eines Broadcast-Dienstes zu informieren.

US 2004/152476 A1 betrifft ebenfalls "Paging", hier insbesondere um Überlastungen von Funkkanälen zu vermeiden.

Daher ist es Aufgabe der vorliegenden Erfindung, ein Verfahren zur Übertragung von einer Gruppe von Multimediadaten zugehörigen Multimediadaten zur Verfügung zu stellen, welche die Empfangsmöglichkeiten der Multimediadaten durch die Empfänger verbessert.

Diese Aufgabe wird mit den Gegenständen gemäß den unabhängigen Patentansprüchen gelöst. Bevorzugte Ausführungsformen sind in den unabhängigen Patentansprüchen angegeben.

Diese Aufgabe wird gelöst durch ein verfahren zur Übertragung von Multimediadaten, wobei erste und zweite Multimediadaten von einem Sender zu einem Empfänger gesendet werden und die ersten und zweiten Multimediadaten einer Gruppe von Multimediadaten zugeordnet sind, wobei weiterhin eine oder mehrere Informationen über die Gruppe von Multimediadaten und von dem Sender vom Empfänger empfangene Empfänger-Information über den Empfänger bei der Wahl des jeweiligen Zeitpunkts des Sendens der ersten und zweiten Multimediadaten berücksichtigt werden.

Durch die Verwendung der Informationen über die Gruppe von Multimediadaten bei der Wahl des Zeitpunkts des Sendens der ersten und zweiten Multimediadaten ist es möglich, die ersten und zweiten Multimediadaten derart aufeinander abgestimmt zu senden, dass die Empfänger verbesserte Möglichkeiten zum Empfang der gesamten Gruppe von Multimediadaten haben.

Multimediadaten können beispielsweise Bild-, Ton-, oder Textdaten oder -dateien sein oder auch eine beliebige Kombination der vorgenannten Daten. Multimediadaten können beispielsweise als relativ kurze, abgeschlossene Dateien, wie beispielsweise Video-, Ton-, Bild- oder Textdateien vorliegen. Weiterhin können die Multimediadaten auch als im Wesentlichen kontinuierlicher bzw. zeitlich lang andauernder Datenstrom vorliegen, wie er z.B. bei der Übertragung von Kino- oder Fernsehfilmen oder Fernsehprogrammen angewendet werden kann.

Der Empfänger kann als Telekommunikationsendgerät, beispielsweise als Mobiltelefon oder Festnetztelefon ausgebildet sein. Mobiltelefone können beispielsweise gemäss dem GSM, dem GPRS, dem UMTS oder auch dem CDMA 2000 Standard ausgebildet sein.

Der Sender kann beispielsweise als eine Basisstation (z.B. als Node-B in einem UMTS-Mobilfunknetzwerk), eine Netzwerksteuerungsstelle (z.B. ein Radio-Network-Controller (RNC) oder eine ähnliche Instanz in einem UMTS-Mobilfunknetzwerk) oder als eine Mobilstation in einem Mobilfunknetz ausgebildet sein. Weiterhin kann der Sender beispielsweise als Serviceeinrichtung zur Verfügungstellung von Multimediadaten in einem Telekommunikationsnetz ausgebildet sein. Insbesondere kann der Sender beispielsweise als "Broadcast-Multicast-Service-Center (BM-SC)" z.B. im Sinne des 3GPP-Standards TS 23.246 V6.6.0 Kapitel 5.1 in einem Mobilfunknetz ausgebildet sein.

Eine Gruppe von Multimediadaten können beispielsweise Bild-und Tondaten sein, die zu einer Videoübertragung gehören. Eine Gruppe kann beispielsweise auch einen oder mehrere Bildkanäle und/oder einen oder mehrere Tonkanäle umfassen. Dabei kann z.B. vorgesehen sein, dass parallel die Bilddaten in verschiedenen Bildformaten geschickt werden und die Tondaten beispielsweise in verschiedenen Tondatenformaten und/oder Sprachen. In einem solchen Fall kann der Empfänger beispielsweise aus der angebotenen Vielfalt der Multimediadaten diejenigen heraussuchen, die den Vorstellungen eines Benutzers oder den technischen Möglichkeiten des Empfängers entsprechen.

Die Gruppe der einander jeweils zugeordneten Multimediadaten kann beispielsweise nur die ersten und zweiten Multimediadaten oder auch unter anderem die ersten und zweiten Multimediadaten umfassen.

Eine Information über die Gruppe von Multimediadaten kann beispielsweise als eine unabhängig von den Multimediadaten gesendete Nachricht ausgebildet sein oder in einer solchen Nachricht enthalten sein. Die Information kann z.B. eine Beschreibung des Inhalts der Gruppe von Multimediadaten, beispielsweise der Name eines Filmes oder eines Nachrichtendienstes (z.B. Sportnachrichten, aktuelle Nachrichten, ...) sowie eine Beschreibung der Multimediadaten, die von der Gruppe umfasst sind, umfassen. Die einzelnen Multimediadaten, beispielsweise die ersten und zweiten Multimediadaten, können dabei z.B. durch eine spezielle Kennnummer (z.B. einen sogenannte "Temporary Mobile Group Identity" (TMGI)) bezeichnet werden, an welcher die jeweiligen Multimediadaten beispielsweise identifizierbar sind. Weiterhin können beispielsweise in einer ersten Information, die den ersten Multimediadaten zugeordnet ist, eine Beschreibung der ersten Multimediadaten und/oder weiterhin Kennnummern von zweiten oder anderen Multimediadaten enthalten sein, welche weitere zu einer Gruppe zugehörige Multimediadaten identifizieren.

Die Wahl des jeweiligen Zeitpunkts des Sendens der ersten und zweiten Multimediadaten kann beispielsweise so erfolgen, dass das Senden zu einem Zeitpunkt stattfindet, an welchen in einem Kommunikationsnetz keine weiteren für jedermann empfangbaren Daten (z.B. Broadcastdaten oder allgemeine Netzwerk-Identifikationsdaten) gesendet werden. Der Zeitpunkt kann auch so gewählt sein, dass die Empfangsgeräte zu diesem ausgewählten Zeitpunkt keine anderen Daten empfangen. Weiterhin können die jeweiligen Zeitpunkte beispielsweise auch so gewählt sein, dass erst die ersten Multimediadaten und nachfolgend die zweiten Multimediadaten gesendet werden. Damit kann z.B. erreicht werden, dass bei Endgeräten mit begrenzten Empfangsmöglichkeiten (die beispielsweise nicht beide Multimediadaten parallel empfangen können) diese die Gruppe von Multimediadaten vollständig empfangen und/oder verarbeiten können.

Empfänger-Informationen können beispielsweise Informationen über technische Eigenschaften des Empfängers umfassen, wie beispielsweise dessen Möglichkeit zum Empfang verschiedener Datenkanäle oder den parallelen Empfang unterschiedlicher Multimediadaten oder auch die Möglichkeit der Speicherung und/oder optischen und/oder akustischen Darstellung der Multimediadaten.

Weiterhin können die Empfänger-Informationen auch Informationen über vom Empfänger gewünschte Multimediadaten umfassen. So können die Informationen beispielsweise Codenummern von Multimediadaten beinhalten, welche zum Zusammenstellen einer Gruppe von Multimediadaten notwendig sind.

In einer weiteren Ausgestaltung der vorstehend beschriebenen Verfahren können die Zeitpunkte des Sendens der ersten und zweiten Multimediadaten beispielsweise derart gewählt sein, dass der Empfänger die Gruppe von Multimediadaten vollständig empfangen und/oder verarbeiten kann. Dabei können beispielsweise auch Empfänger-Informationen wie vorstehend beschrieben verwendet werden.

Weiterhin kann vorgesehen sein, dass mehrere Empfänger zum Empfang von Multimediadaten vorhanden sind und der Zeitpunkt des sendens der ersten und zweiten Multimediadaten derart gewählt wird, dass möglichst viele der Empfänger die jeweils zu empfangenden Multimediadaten vollständig empfangen und/oder verarbeiten können.

Wenn der Empfänger die Gruppe von Multimediadaten nicht vollständig empfangen und/oder verarbeiten kann, kann beispielsweise vorgesehen sein, eine Konfliktnachricht an den Sender zu schicken. Diese kann beispielsweise in Information darüber beinhalten, dass der Empfänger nicht in der Lage war, die Gruppe von Multimediadaten vollständig zu empfangen und/oder zu verarbeiten. Weiterhin kann die Konflikt-Nachricht Informationen darüber enthalten, welche Teile der Multimediadaten empfangen und/oder verarbeitet wurden. Die Konflikt-Nachricht kann auch Informationen darüber enthalten, welche Teile der Multimediadaten noch nicht empfangen und/oder verarbeitet wurden.

In einer weiteren Ausgestaltung des vorstehend beschriebenen Verfahrens kann der Sender nach dem Senden der ersten und zweiten Multimediadaten beim Empfänger anfragen, ob die ersten und/oder Multimediadaten nochmals gesendet werden sollen. Auf diese Weise kann sichergestellt werden, dass auch bei einer misslungenen Übertragung der Gruppe von Multimediadaten der Empfänger nochmals die Möglichkeit des Empfangs erhält. Dies gewährleistet eine höhere Datensicherheit und Zuverlässigkeit eines Multimediadatendienstes.

Der Sender kann bei einem zweiten Senden der ersten und/oder zweiten Multimediadaten beispielsweise zur Übertragung verwendete Datenkanäle derart anpassen, dass der Empfänger die Gruppe von Multimediadaten vollständig empfangen und/oder verarbeiten kann. Auf diese weise kann der Sender beispielsweise auf technische Eigenschaften des Empfängers reagieren. Solche Eigenschaften können z.B. umfassen, dass bestimmte Kombinationen von Datenkanälen empfangen werden können und andere Kombinationen nicht.

Die vorstehende Aufgabe wird weiterhin von einem Sender gelöst, der zur Durchführung eines Verfahrens gemäß der vorstehenden Beschreibung ausgebildet ist. Weiterhin wird diese Aufgabe auch durch einen Empfänger gelöst, der ebenfalls zur Durchführung des vorstehend beschriebenen Verfahrens ausgebildet ist.

Weitere vorteilhafte Ausgestaltungen finden sich in den Unteransprüchen.

Im Folgenden wird die Erfindung beispielhaft mit Bezug auf die beiliegende Figur erläutert.

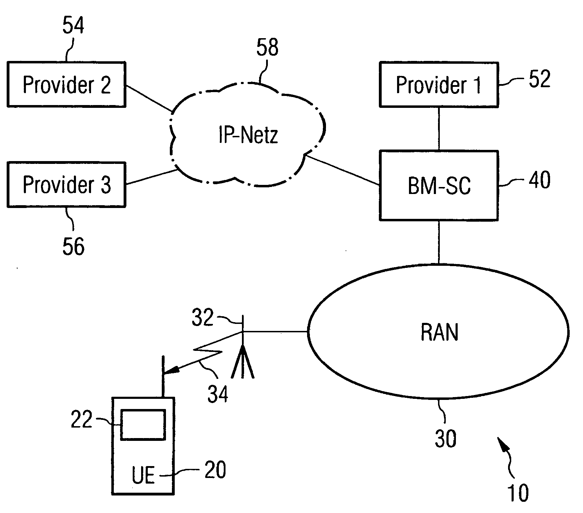

Figur 1 zeigt ein Beispiel für ein Mobilfunksystem 10, welches beispielsweise zur Durchführung des vorstehend beschriebenen Verfahrens geeignet ist. Dabei empfängt ein Mobilfunkendgerät 20, welches eine Anzeigeeinrichtung 22 aufweist, ein Funksignal 34 von einer Basisstation 32 eines Funkzugangsnetzwerks 30 (in Abbildung 1 auch als RAN bezeichnet; RAN = Radio Access Network). Mit dem Radio Access Network verbunden ist eine Multimediasteuerungsstelle 40, in Figur 1 als BM-SC bezeichnet. Die Multimediasteuerungsstelle 40 ist wiederum mit einem ersten Multimedia-Dienstleister 52 verbunden, der in Figur 1 als "Provider 1" bezeichnet wird. Zwei weitere Multimediadienstleister 54 und 56 (in Figur 1 als "Provider 2 und 3" bezeichnet) sind mit der Multimediasteuerungsstelle 40 über ein Kommunikationsnetzwerk 58, welches beispielsweise als IP-Netzwerk ausgebildet sein kann, verbunden. Von den Multimediadienstleistern 52, 54, 56 zur Verfügung gestellt Multimediadaten werden in der Multimediasteuerungsstelle 40 zu Multimediadiensten aufbereitet. Die verfügbaren Multimediadienste werden dann vom Multimediasteuerungszentrum 40 über das Funkzugangsnetzwerk 30 an das Endgerät 20 signalisiert. Ein Benutzer des Endgerätes 20 kann dann einen oder mehrere der Multimediadienste bestellen und eine entsprechende Nachricht an die Multimediasteuerungstelle 40 zurücksenden. Die entsprechenden Multimediadaten werden dann beispielsweise sofort oder auch später von der Multimediasteuerungsstelle 40 an das Endgerät 20 im Rahmen des Multimediadatendienstes übertragen.

Über interne Signalisierungsnachrichten im Netzwerk 30, 40 werden die Funkschichten im Netzwerk 30, 40 mit der Information über die Bestandteile eines Multimediadatendienstes (z.B. die Kennnummern (z.B.: TMGI: "Temporary Mobile Group Identity") von Multimediadaten, aus welchen sich der Datendienst zusammensetzt). Aufgrund dieser Information kann das Netzwerk 30, 40 unabhängig einen intelligenten Zeitplan für verschiedene Multimedia-Übertragungen erstellen (z.B. ohne Herauszufinden, ob interessierte Mobiletationen vorhanden sind oder nicht). Weiterhin kann das Netzwerk 30, 40 auch Informationen der Mobilstationen 20 (z.B. Hardware oder Softwareeigenschaften) verwenden, um einen Zeitplan für die Übertragung von gewünschten Multimediadaten so zu erstellen, dass mindestens zwei Mobilstationen, oder auch möglichst viele Mobilstationen, die Daten gleichzeitig empfangen können. Vor dem Senden kann das Netzwerk 30, 40 auch eine Nachricht an die Mobilfunkstationen 20 senden, dass ein derartiger Zeitplan erstellt werden soll und dann eine Antwort der Mobilstationen 20 erwarten, bevor die tatsächlichen Funk-Ressourcen den unterschiedlichen Multimediaübertragungen zugeordnet werden.

Weiterhin kann auch von einer Mobilstation 20 eine Information an das Netzwerk 30, 40 gehen, aus welchen Multimediainformationen (TMGIs) ein gewisser Multimediadatenservice aufgebaut ist (dies können unter Umständen mehr Informationen sein, als der Nutzer eigentlich zu sehen wünscht). Diese Information kann dann vom Netzwerk 30, 40 wiederum verwendet werden, um einen Zeitplan zum Versenden der Multimediadaten zu erstellen.

Vorstehend bezüglich eines einzelnen Endgeräts 20 gemachte Aussagen können auch auf ein Netzwerk 30, 40 mit einer Vielzahl Mobilstationen angewendet werden. Dabei kann z.B. versucht werden, alle Mobilstationen 20 gleichermaßen gut zu bedienen.

Weiterhin kann eine Mobilatation 20 einen Übertragungswunsch an das Netzwerk 30, 40 senden (z.B. erneute Übertragung mit einer reduzierten Bitrate einer Videoübertragung). Diese Information kann dann an das Netzwerk zurückgeleitet werden und bei zukünftigen oder auch gerade laufenden Übertragungen berücksichtigt zu werden.

Die vorgeschlagenen Verfahren erlauben es beispielsweise einem Funknetzwerk 30 die Luftschnittstelle bei der Übertragung von Multimediadaten besser und effizienter zu nützen. Die so verbesserten Möglichkeiten der Zeitplanung bei der Übertragung von Multimediadaten führen zu einem besser vorhersagbaren Verhalten des Netzwerks 30, 40 bei der Übertragung von Multimediadaten. Nicht kompatible Gruppen von Multimediadaten können auf diese Weise auch schneller und einfacher identifiziert werden und dann durch eine Mobilstation 20 und/oder ein Netzwerk 20, 40 mittels einer entsprechenden Konflikt-Nachricht signalisiert werden.

## Patentansprüche

1. Verfahren zur Übertragung von Multimediadaten,
wobei erste und zweite Multimediadaten von einem Sender (40) an einen Empfänger (20) gesendet werden und wobei die ersten und zweiten Multimediadaten einer Gruppe von Multimediadaten zugeordnet sind,
wobei eine Information über die Gruppe von Multimediadaten bei der Wahl des jeweiligen Zeitpunkts des Sendens der ersten und zweiten Multimediadaten berücksichtigt wird,
**dadurch gekennzeichnet,**
**dass** bei der Wahl des jeweiligen Zeitpunkts des Sendens der ersten und zweiten Multimediadaten von dem Sender (40) vom Empfänger (20) empfangene Empfänger-Informationen über den Empfänger (20) berücksichtigt werden.

2. Verfahren nach Anspruch 1,
**dadurch gekennzeichnet,**
**dass** die Information über die Gruppe von Multimediadaten ein Information über die ersten und zweiten Multimediadaten umfasst.

3. Verfahren nach Anspruch 1 oder 2,
**dadurch gekennzeichnet,**
**dass** die Empfänger-Informationen Informationen über technische Eigenschaften des Empfängers umfassen.

4. Verfahren nach einem der Ansprüche 1 bis 3,
**dadurch gekennzeichnet,**
**dass** die Empfänger-Informationen Informationen über die vom Empfänger gewünschten Multimediadaten umfasst.

5. Verfahren nach einem der Ansprüche 1 bis 4,
**dadurch gekennzeichnet,**
**dass** die jeweiligen Zeitpunkte des Sendens der ersten und zweiten Multimediadaten derart gewählt sind, dass der Empfänger (20) die Gruppe von Multimediadaten vollständig empfangen und/oder verarbeiten kann.

6. Verfahren nach einem der Ansprüche 1 bis 5,
**dadurch gekennzeichnet,**
**dass** eine Konflikt-Nachricht an den Sender (40) geschickt wird, wenn der Empfänger (20) die Gruppe von Multimediadaten nicht vollständig empfangen und/oder verarbeiten kann.

7. Verfahren nach einem der Ansprüche 1 bis 6,
**dadurch gekennzeichnet,**
**dass** der Sender (40) nach dem Senden der ersten und zweiten Multimediadaten beim Empfänger (20) anfragt, ob die ersten und/oder zweiten Multimediadaten nochmals gesendet werden sollen.

8. Verfahren nach einem der Ansprüche 1 bis 7,
**dadurch gekennzeichnet,**
**dass** bei einem zweiten Senden der ersten und/oder zweiten Multimediadaten der Sender (40) zur Übertragung verwendete Datenkanäle derart anpasst, dass der Empfänger die Gruppe von Multimediadaten vollständig empfangen und/oder verarbeiten kann.

9. Verfahren nach einem der Ansprüche 1 bis 8,
**dadurch gekennzeichnet,**
**dass** der Sender (40) als Multimedia-Steuerungsstelle ausgebildet ist.

10. Verfahren nach einem der Ansprüche 1 bis 9,
**dadurch gekennzeichnet,**
**dass** der Empfänger (20) als mobiles Telekommunikations-Endgerät ausgebildet ist.

11. Sender (40), der ausgebildet ist,
erste und zweite Multimediadaten an einen Empfänger (20) zu senden, wobei die ersten und zweiten Multimediadaten einer Gruppe von Multimediadaten zugeordnet sind, und
eine Information über die Gruppe von Multimediadaten und bei der Wahl des jeweiligen Zeitpunkts des Sendens der ersten und zweiten Multimediadaten zu berücksichtigen,
**dadurch gekennzeichnet, dass**
der Sender (40) ferner ausgebildet ist, bei der Wahl des jeweiligen Zeitpunkts des Sendens der ersten und zweiten Multimediadaten von dem Sender (40) vom Empfänger (20) empfangene Empfänger-Informationen über den Empfänger (20) zu berücksichtigen.

## Claims

1. A method for transmission of multimedia data,
wherein first and second multimedia data from a transmitter (40) are transmitted to a receiver (20) and wherein the first and second multimedia data of a group are assigned to multimedia data,
wherein an information on the set of multimedia data in the choice of the respective time point of sending the first and second multimedia data is taken into account, **characterized in**
**that** in the choice of the respective time point of sending the first and second multimedia data receiver-information about the receiver (20) received by the sender (40) from the receiver (20) is taken into account.

2. The method of claim 1,
**characterized in**
**that** the information about the set of multimedia data comprises information about the first and second multimedia data.

3. A method according to claim 1 or 2,
**characterized in**
**that** the receiver-information includes information about technical characteristics of the receiver.

4. The method of one of the claims 1 to 3,
**characterized in**
**that** the receiver-information includes information about the multimedia data requested by the receiver.

5. Method according to one of the claims 1 to 4,
**characterized in**
**that** the respective points in time of sending the first and second multimedia data are selected such that the receiver (20) can completely receive and/or handle the set of multimedia data.

6. Method according to one of claims 1 to 5,
**characterized in**
**that** a conflict message is sent to the transmitter (40) when the receiver (20) cannot completely receive and/or handle the group of multimedia data.

7. Method according to one of claims 1 to 6,
**characterized in**
**that**, after transmission of the first and second multimedia data, the transmitter (40) requests the receiver (20) whether the first and/or second multimedia data should be sent again.

8. Method according to one of claims 1 to 7,
**characterized in**
**that** the transmitter (40) adjusts data channels used in a second transmission of the first and/or second multimedia data such that the receiver can completely receive and/or handle the set of multimedia data.

9. Method according to one of claims 1 to 8,
**characterized in**
**that** the transmitter (40) is formed as a multimedia control device.

10. Method according to one of claims 1 to 9,
characterized,
that the receiver (20) is designed as a mobile telecommunication terminal.

11. Transmitter (40), adapted to
transmit first and second multimedia data to a receiver (20), wherein the first and second multimedia data of a group are assigned to multimedia data,
take into account information on the set of multimedia data in the choice of the respective time point of sending the first and second multimedia data,
**characterized in that**
the transmitter (40) is also adapted to take into account receiver-information about the receiver (20) received by the sender (40) from the receiver (20) in the choice of the respective time point of sending the first and second multimedia data.

## Revendications

1. Procédé de transmission de données multimédia,
dans lequel des premières et deuxièmes données multimédia sont émises par un émetteur (40) vers un récepteur (20), et dans lequel les premières et deuxièmes données multimédia sont associées à un groupe de données multimédia,
dans lequel une information concernant le groupe de données multimédia est prise en compte dans le choix de l'instant respectif d'émission des premières et deuxièmes données multimédia,
**caractérisé en ce que** des informations de récepteur concernant le récepteur (20) reçues par l'émetteur (40) depuis le récepteur (20) sont prises en compte dans le choix de l'instant respectif d'émission des premières et deuxièmes données multimédia.

2. Procédé selon la revendication 1,
**caractérisé en ce que** l'information concernant le groupe de données multimédia comprend une information concernant les premières et deuxièmes données multimédia.

3. Procédé selon la revendication 1 ou 2,
**caractérisé en ce que** les informations de récepteur comprennent des informations concernant les caractéristiques techniques du récepteur.

4. Procédé selon l'une des revendications 1 à 3,
**caractérisé en ce que** les informations de récepteur comprennent des informations concernant les données multimédia souhaitées par le récepteur.

5. Procédé selon l'une des revendications 1 à 4,
**caractérisé en ce que** les instants respectifs d'émission des premières et deuxièmes données multimédia sont choisis de telle sorte que le récepteur (20) soit apte à recevoir et/ou traiter complètement le groupe de données multimédia.

6. Procédé selon l'une des revendications 1 à 5,
**caractérisé en ce qu'**un message de conflit est envoyé à l'émetteur (40) lorsque le récepteur (20) n'est pas apte à recevoir et/ou traiter complètement le groupe de données multimédia.

7. Procédé selon l'une des revendications 1 à 6,
**caractérisé en ce qu'**après l'émission des premières et deuxièmes données multimédia, l'émetteur (40) demande auprès du récepteur (20) si les premières et/ou deuxièmes données multimédia doivent être émises encore une fois.

8. Procédé selon l'une des revendications 1 à 7,
**caractérisé en ce que** lors d'une deuxième émission des premières et/ou deuxièmes données multimédia, l'émetteur (40) adapte des canaux de données utilisés pour la transmission de telle sorte que le récepteur soit apte à recevoir et/ou traiter complètement le groupe de données multimédia.

9. Procédé selon l'une des revendications 1 à 8,
**caractérisé en ce que** l'émetteur (40) est configuré en tant que poste de commande multimédia.

10. Procédé selon l'une des revendications 1 à 9,
**caractérisé en ce que** le récepteur (20) est configuré en tant que terminal de télécommunication mobile.

11. Émetteur (40) configuré pour
émettre des premières et deuxièmes données multimédia vers un récepteur (20), les premières et deuxièmes données multimédia étant associées à un groupe de données multimédia, et
prendre en compte une information concernant le groupe de données multimédia dans le choix de l'instant respectif d'émission des premières et deuxièmes données multimédia,
**caractérisé en ce que** l'émetteur (40) est en outre configuré pour prendre en compte des informations de récepteur concernant le récepteur (20) et reçues par l'émetteur (40) depuis le récepteur (20), dans le choix de l'instant respectif d'émission des premières et deuxièmes données multimédia.
